# EUROPÄISCHE PATENTANMELDUNG

(11) **EP 2 319 653 A1**
(43) Veröffentlichungstag der Anmeldung: **11.05.2011**
(21) Anmeldenummer: 10400057.5
(22) Anmeldetag: 08.11.2010
(51) Int. Cl.: B23K 26/03, B23K 26/08, B23K 26/12, B23K 26/38, B23K 26/40, B23K 26/067, A47J 43/14

(54) **Einrichtung zum Schneiden von Schalen von Eiern mit Laserstrahlen wenigstens eines Lasers zum Öffnen von Eiern**

(30) Priorität: 10.11.2009 DE 102009052976; 10.11.2009 DE 202009015426 U
(71) Anmelder: LASERVORM GmbH, 09648 Altmittweida (DE)
(72) Erfinder: Kimme, Thomas, Dipl.-Ing, 09243 Niederfrohna (DE); Ochlich, Hans-Michael, Dr.-Ing., 09648 Mittweida (DE)
(74) Vertreter: Krause, Wolfgang

(57) **Zusammenfassung**

Die Erfindung betrifft eine Einrichtung zum Schneiden von Schalen von Eiern mit Laserstrahlen wenigstens eines Lasers zum Öffnen von Eiern.
Die Einrichtung zeichnet sich insbesondere dadurch aus, dass die Schalen von Eiern einfach und schnell geschnitten werden können.
Dazu ist eine Transportvorrichtung (4) für wenigstens einen Träger (5) mit mehreren in einer Ebene stehend angeordneten Eiern ein erster Bestandteil eines Gestells. Weiterhin sind ein System (7) zum Leiten von Laserstrahlen (2) und Laserstrahlen (2) fokussierende Einrichtungen (16) an ein in x- und y-Richtung wirkendes Antriebssystem (8) als ein Mechanismus (6) gekoppelt, so dass Eier mittels der Transportvorrichtung (4) und sowohl das optische System (7) als auch die fokussierenden Einrichtungen (16) korrespondierend zueinander bewegbar sind und Schalen der Eier nacheinander oder gruppenweise geschnitten werden. Der Mechanismus (16) ist dazu in einem geschlossenen Raum (10) als zweiter Bestandteil (10) des Gestells (3) angeordnet. Wenigstens ein Bereich (18) des zweiten Bestandteils (10) besteht aus einem für die Laserstrahlen transparenten Material zum Durchtritt der Laserstrahlen (2) zum Schneiden.

## Beschreibung

Die Erfindung betrifft Einrichtungen zum Schneiden von Schalen von Eiern mit Laserstrahlen wenigstens eines Lasers zum Öffnen von Eiern.

Durch die Druckschrift US 5,285,750 A ist ein Verfahren zum Schneiden der Schale eines Eies bekannt. Dabei werden Laserstrahlen eines Nd:YAG- oder CO₂-Lasers zum Schneiden der Eierschale verwendet. Das Schneiden basiert auf der Bewegung des Eies gegenüber dem fest positionierten Laserstrahl oder der Verwendung eines Axikons zur Erzeugung eines ringförmigen Laserstrahles. Im ersten Fall ist dazu das Ei auf einem Positioniersystem platziert, wobei während des Schneidens das Ei zweidimensional bewegt wird. Im zweiten Fall ist die Geometrie des Schnittes durch die Ausbildung des Axikons vorgegeben. In beiden Fällen wird nacheinander die Schale nur eines Eies geschnitten.

Der im Patentanspruch 1 angegebenen Erfindung liegt die Aufgabe zugrunde, die Schalen von Eiern einfach und schnell zu schneiden, so dass diese nachfolgend einfach geöffnet werden können.

Diese Aufgabe wird mit den im Patentanspruch 1 aufgeführten Merkmalen gelöst.

Die Einrichtungen zum Schneiden von Schalen von Eiern mit Laserstrahlen wenigstens eines Lasers zum Öffnen von Eiern zeichnen sich insbesondere dadurch aus, dass die Schalen von Eiern einfach und schnell geschnitten werden können. Nach dem Schneiden können die Eier mit den geschnittenen Schalen einfach geöffnet werden.
Dazu ist eine Transportvorrichtung für wenigstens einen Träger mit mehreren in einer Ebene stehend angeordneten Eiern ein erster Bestandteil eines Gestells. Weiterhin sind ein System zum Leiten von Laserstrahlen und Laserstrahlen fokussierende Einrichtungen an ein in x- und y- Richtung wirkendes Antriebssystem als ein Mechanismus gekoppelt, so dass Eier mittels der Transportvorrichtung und sowohl das optische System als auch die fokussierenden Einrichtungen korrespondierend zueinander bewegbar sind und Schalen der Eier nacheinander oder gruppenweise über die fokussierten und in x- und y-Richtung des Antriebssystems bewegten Laserstrahlen geschnitten werden. Der Mechanismus ist dazu vorteilhafterweise in einem geschlossenen Raum als zweiter Bestandteil des Gestells angeordnet. Wenigstens ein Bereich des zweiten Bestandteils besteht aus einem für die Laserstrahlen transparenten Material zum Durchtritt der Laserstrahlen zum Schneiden von Schalen der Eier. Darüber hinaus sind der Laser, die Transportvorrichtung und die Bestandteile des Mechanismus mit einer Steuereinrichtung zusammengeschaltet.
Mit der Einrichtung können damit die Schalen auf dem Träger angeordneter Eier nacheinander oder gruppenweise während deren Transport geschnitten werden. Die Schnittbewegung wird durch das erste Antriebssystem gewährleistet. Dadurch werden die Schalen mit den fokussierten Laserstrahlen beaufschlagt, so dass ein sicheres Durchtrennen der Schalen gewährleistet ist. Das kann insbesondere auch so erfolgen, dass die Eihaut unterhalb der Schale nicht beschädigt wird, so dass die Eier vor dem Öffnen nicht teilweise auslaufen können.
Der Mechanismus befindet sich vorteilhafterweise in einem abgeschlossenem Raum.
Damit wird sichergestellt, dass keine beim Schneiden auftretende Abprodukte in oder an den Mechanismus gelangen können. Dadurch hervorgerufene Verunreinigungen, insbesondere durch eine Reaktion mit Luft verursachte weitere organische Abprodukte, treten nicht auf. Verunreinigungen von nachfolgenden zu schneidenden Eiern mit Abprodukten vorangegangener Schneidvorgänge oder Verunreinigungen aus Reaktionen von Abprodukten werden vermieden. Weiterhin erübrigt sich eine ansonsten notwendige Reinigung des Mechanismus.
Weiterhin können durch den Mechanismus hervorgerufene Verunreinigungen nicht auf die Eier und deren Umgebeung gelangen. Das Schneiden erfolgt vorzugsweise in einem Reinraum, so dass dieser Sachverhalt von besonderer Bedeutung ist.
Die Einrichtung ist damit jederzeit, auch nach einem längeren Stillstand, betriebsbereit. Die optische Kopplung zwischen dem Mechanismus und den Eiern basiert auf dem Bereich der Wand des einen geschlossenen Raum darstellenden Bestandteils der Einrichtung aus einem für die Laserstrahlen transparentem Material.

Vorteilhafte Ausgestaltungen der Erfindung sind in den Patentansprüchen 2 bis 9 angegeben.

Nach Weiterbildung des Patentanspruchs 2 befinden sich Sensoren zum Feststellen des Vorhandenseins jeweils eines Eies über der Transportvorrichtung, die weiterhin mit der Steuereinrichtung verbunden sind. Damit wird vorteilhafterweise verhindert, dass nicht mit einem Ei versehene Bestandteile der Einrichtung oder des Trägers mit Laserstrahlen beaufschlagt werden. Dadurch hervorgerufene Beschädigungen werden vermieden.

Die Sensoren sind nach der Weiterbildung des Patentanspruchs 3 vorteilhafterweise Abstandsensoren oder Lichtschranken. Derartige Realisierungen einschließlich der Wirkungsweisen sind bekannt. Damit wird sicher einfach festgestellt, ob ein Ei vorhanden ist oder nicht.

Die Laserstrahlen fokussierende Einrichtungen sind nach der Weiterbildung des Patentanspruchs 4 in mindestens einer Reihe angeordnet. Weiterhin sind wenigstens eine Strahlfalle und im Strahlengang vor der fokussierenden Einrichtung jeweils entweder ein Klappspiegel oder ein verfahrbarer Spiegel angeordnet, so dass Laserstrahlen entweder bei Vorhandensein eines Eies zum Schneiden auf dessen Schale oder bei Nichtvorhandensein eines Eies auf die Strahlfalle treffen. Darüber hinaus sind die Antriebe für die Klappspiegel oder verfahrbaren Spiegel mit der Steuereinrichtung verbunden. Zum Schneiden nicht benötigte Laserstrahlen werden einfach auf die Strahlfalle geleitet. Das ist eine einfache und unkomplizierte Methode, um zu vermeiden, dass die Laserstrahlen auf Bestandteile der Einrichtung gelangen.

Im Strahlengang nach einer die Laserstrahlen auskoppelnden Einrichtung ist nach der Weiterbildung des Patentanspruchs 5 wenigstens ein erster Strahlteiler angeordnet. Weiterhin befinden sich im Strahlengang nach dem ersten Strahlteiler für den ersten und den zweiten Teilstrahl jeweils ein zweiter Strahlteiler und ein Ablenkspiegel. Darüber hinaus sind nach den zweiten Strahlteilern und den Ablenkspiegeln jeweils entweder der Klappspiegel oder der verfahrbare Spiegel sowie die fokussierende Einrichtung angeordnet. Mit einer derartigen Vorrichtung können die Eierschalen von vier in wenigstens einer Reihe angeordneten Eiern gleichzeitig geschnitten werden.

Nach der Weiterbildung des Patentanspruchs 6 ist wenigstens eine Einrichtung bestehend aus einem zweiten Strahlteiler, entweder einem Klappsiegel oder einem verfahrbaren Spiegel sowie einer fokussierenden Einrichtung verfahrbar am Mechanismus angeordnet, so dass der Abstand zu mindestens einer benachbarten Einrichtung einstellbar ist.
Weiterhin ist nach der Weiterbildung des Patentanspruchs 7 wenigstens eine Einrichtung bestehend aus einem Ablenkspiegel, entweder einem Klappsiegel oder einem verfahrbaren Spiegel sowie einer fokussierenden Einrichtung verfahrbar am Mechanismus angeordnet, so dass der Abstand zu mindestens einer benachbarten Einrichtung einstellbar ist.
Dadurch können die Systeme leicht auf die jeweiligen Positionen der Eier auf den Trägern angepasst werden. Weiterhin können auch Eier auf unterschiedlich gestalteten Trägern leicht geschnitten werden.

Der Träger ist nach der Weiterbildung des Patentanspruchs 8 vorteilhafterweise eine Palette mit in mehreren Reihen angeordneten Öffnungen oder Vertiefungen zur teilweisen Aufnahme jeweils eines Eies, wobei jeweils eine Reihe quer zur Transportvorrichtung der Palette angeordnet ist. Weiterhin sind der Laser, die Transportvorrichtung und die Bestandteile des Mechanismus mit der Steuereinrichtung so zusammengeschaltet, dass die Schalen jeweils mindestens einer Reihe von Eiern geschnitten werden. Nach diesem Schneidvorgang wird eine nächste Reihe von Eiern geschnitten. Während des Schneidvorgangs einer Reihe wird der Träger und der Mechanismus korrespondierend zueinander bewegt oder die Bewegungen des Trägers und des Mechanismus sind gestoppt.

Das Antriebssystem und die Steuereinrichtung sind nach der Weiterbildung des Patentanspruchs 9 so zusammengeschaltet, dass die Schale des Eies über dessen Umfang bis auf wenigstens einen Steg geschnitten wird. Damit verbleibt die vom Ei getrennte Kappe sicher am Ei, so dass ein teilweises Ablaufen von Eimasse vermieden wird.

Ein Ausführungsbeispiel der Erfindung ist in den Zeichnungen jeweils prinzipiell dargestellt und wird im Folgenden näher beschrieben.

Es zeigen:
- Fig. 1: eine Einrichtung zum Schneiden von Schalen von Eiern mit Laserstrahlen wenigstens eines Lasers zum Öffnen von Eiern und
- Fig. 2: ein optisches System.

Eine Einrichtung zum Schneiden von Schalen von Eiern mit Laserstrahlen 2 wenigstens eines Lasers 1 zum Öffnen von Eiern besteht im Wesentlichen aus einem Gestell 3 mit einer Transportvorrichtung 4 für wenigstens einen Träger 5 mit Eiern und einem Mechanismus 6 mit einem optischen System 7 zum Leiten von Laserstrahlen 2 und Laserstrahlen 2 fokussierenden Einrichtungen 16 gekoppelt mit einem Antriebssystem 8.

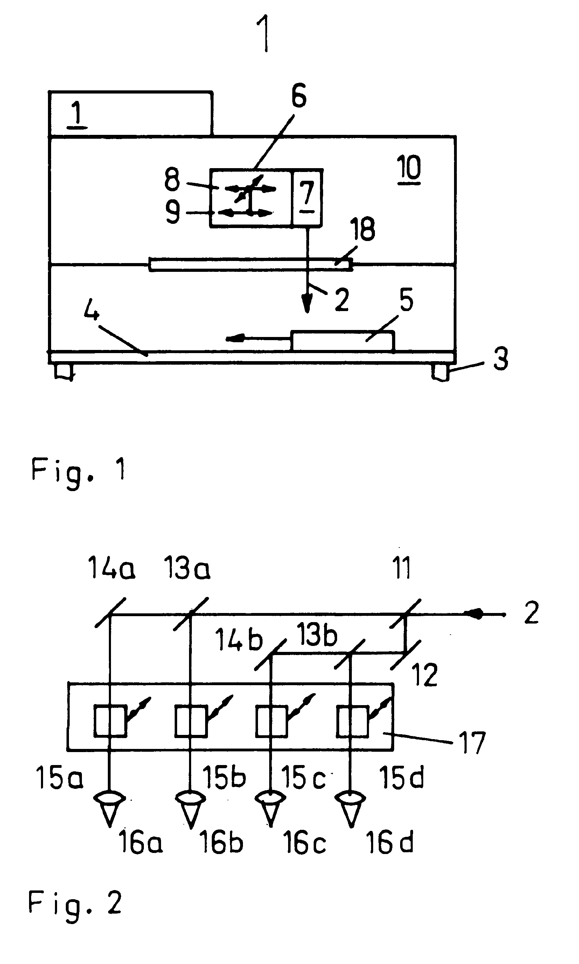

Die Fig. 1 zeigt eine Einrichtung zum Schneiden von Schalen von Eiern mit Laserstrahlen 2 wenigstens eines Lasers 1 zum Öffnen von Eiern in einer prinzipiellen Darstellung.

Die Transportvorrichtung 4 ist ein bekannter Stetigförderer in Form eines Gurt- oder Gliederförderers oder ein bekannter Rollenförderer auf dem der wenigstens eine Träger 5 mit mehreren in einer Ebene stehend angeordneten Eiern befördert wird. Diese Transportvorrichtung 4 ist ein erster Bestandteil des Gestells 3.
Über der Transportvorrichtung 4 ist der Mechanismus 6 in einem geschlossenem Raum 10 als zweiter Bestandteil des Gestells 3 angeordnet. Der Mechanismus 6 selbst besteht aus dem optischen System 7 zum Leiten von Laserstrahlen 2 und Laserstrahlen 2 fokussierenden Einrichtungen 16 gekoppelt an das in x- und y-Richtung wirkende Antriebssystem 8. In einer Ausführungsform ist das in x- und y-Richtung wirkende Antriebssystem 8 ein erstes in x- und y-Richtung wirkendes Antriebssystem 8, welches an ein zweites Antriebssystem 9 zur Bewegung des Mechanismus 6 korrespondierend zu den Eiern gekoppelt ist.
Auf dem Träger 5 sind in diesem Ausführungsbeispiel mehrere Reihen von Eiern angeordnet, wobei eine Reihe aus vier Eiern gebildet ist. Die Reihen sind quer zur Transportrichtung des Trägers 5 angeordnet.
Zum Schneiden der vier Eier einer Reihe besteht das optische System 7 aus Strahlteilern 11, 13, Ablenkspiegeln 12, 14, verfahrbaren Spiegeln 15, den fokussierenden Einrichtungen 16 und einer Strahlfalle 17.

Die Fig. 2 zeigt ein optisches System 7 in einer prinzipiellen Darstellung.

Im Strahlengang nach einer die Laserstrahlen 2 in den geschlossenen Raum 10 auskoppelnden Einrichtung ist erster Strahlteiler 11 angeordnet. Im Strahlengang nach dem ersten Strahlteiler 11 befinden sich für den ersten und den zweiten Teilstrahl jeweils ein zweiter Strahlteiler 13a, 13b und ein Ablenkspiegel 14a, 14b. Im zweiten Teilstrahl nach dem ersten Strahlteiler 11 ist ein zweiter Ablenkspiegel 12 angeordnet, so dass die Teilstrahlen nach dem ersten Strahlteiler 11 parallel zueinander verlaufen. Im Strahlengang nach den zweiten Strahlteilern 13a, 13b und den zweiten Ablenkspiegeln 14a, 14b sind jeweils nacheinander ein verfahrbarer Spiegel 15a, 15b, 15c, 15d sowie die fokussierenden Einrichtungen 16a, 16b, 16c, 16d angeordnet. Die fokussierenden Einrichtungen 16 leiten den jeweiligen Teillaserstrahl auf die zu schneidenden Eierschalen, wobei sich die verfahrbaren Spiegel 15 nicht in deren Teillaserstrahl befinden. Ist dagegen ein verfahrbarer Spiegel 15 im Strahlengang, so wird dieser Teillaserstrahl auf eine Strahlfalle 17 gelenkt. Die verfahrbaren Spiegel 15 sind dabei mittels jeweils eines translatorisch wirkenden Antriebs verfahrbar.
Die Bewegungen für den Schneidvorgang der Eierschalen werden mittels des in x- und y-Richtung wirkenden Antriebssystems 8 realisiert. Für die korrespondierende Bewegung des optischen Systems 7 in Bezug zum Träger 5 auf der Transportvorrichtung 4 wird ebenfalls das Antriebssystem 8 eingesetzt.

Bei der Ausführungsform werden die Bewegungen für den Schneidvorgang der Eierschalen mittels des in x- und y-Richtung wirkenden ersten Antriebssystems 8 realisiert. Für die korrespondierende Bewegung des optischen Systems 7 einschließlich des ersten Antriebssystems 8 in Bezug zum Träger 5 auf der Transportvorrichtung 4 wird das zweite Antriebssystem 9 eingesetzt.
Dazu sind der Laser 1, die Transportvorrichtung 4 und die Bestandteile des Mechanismus 6 einschließlich des Antriebssystems 8 oder der Antriebssysteme 8, 9 und der Antriebe für die verfahrbaren Spiegel 15 mit einer Steuereinrichtung verbunden. Letztere ist ein bekanntes Datenverarbeitungssystem.
Der Mechanismus 7 befindet sich in einem geschlossenen Raum 10 als zweiter Bestandteil des Gestells 3. Wenigstens ein Bereich des zweiten Bestandteils als Wandbereich 18 besteht aus einem für die Laserstrahlen 2 transparenten Material, so dass die Laserstrahlen 2 zum Schneiden diesen Wandbereich 18 passieren können.
Der Laser 1 befindet sich außerhalb des Gestells 3. Die Laserstrahlen 2 des Lasers 1 gelangen über die Laserstrahlen 2 auskoppelnde Einrichtung in den Raum 10 mit dem Mechanismus 6.

In einer weiteren Ausführungsform befinden sich Sensoren zum Feststellen des Vorhandenseins jeweils eines Eies über der Transportvorrichtung 4, die mit der Steuereinrichtung verbunden sind. Das sind beispielsweise bekannte optische Abstandsensoren oder Lichtschranken.

## Patentansprüche

1. Einrichtung zum Schneiden von Schalen von Eiern mit Laserstrahlen wenigstens eines Lasers zum Öffnen von Eiern, **dadurch gekennzeichnet, dass** eine Transportvorrichtung (4) für wenigstens einen Träger (5) mit mehreren in einer Ebene stehend angeordneten Eiern ein erster Bestandteil eines Gestells (3) ist und dass ein optisches System (7) zum Leiten von Laserstrahlen (2) und Laserstrahlen (2) fokussierende Einrichtungen (16) an wenigstens ein in x- und y-Richtung wirkendes Antriebssystem (8) als ein Mechanismus (6) gekoppelt sind, so dass Eier mittels der Transportvorrichtung (4) und sowohl das optische System (7) als auch die fokussierenden Einrichtungen (16) korrespondierend zueinander bewegbar sind und Schalen von Eiern nacheinander oder gruppenweise über die fokussierten und in x- und y-Richtung des Antriebssystems (8) bewegten Laserstrahlen (2) geschnitten werden, dass der Mechanismus (6) in einem geschlossenen Raum (10) als zweiter Bestandteil des Gestells (3) angeordnet ist, dass wenigstens ein Bereich (18) des zweiten Bestandteils aus einem für die Laserstrahlen (2) transparenten Material zum Durchtritt der Laserstrahlen (2) zum Schneiden von Schalen von Eiern besteht und dass der Laser (1), die Transportvorrichtung (4) und die Bestandteile des Mechanismus (6) mit einer Steuereinrichtung zusammengeschaltet sind.

2. Einrichtung nach Patentanspruch 1, **dadurch gekennzeichnet, dass** sich Sensoren zum Feststellen des Vorhandenseins jeweils eines Eies über der Transportvorrichtung (4) befinden und dass die Sensoren mit der Steuereinrichtung verbunden sind.

3. Einrichtung nach Patentanspruch 2, **dadurch gekennzeichnet, dass** die Sensoren Abstandsensoren oder Lichtschranken sind.

4. Einrichtung nach Patentanspruch 1 und 2, **dadurch gekennzeichnet, dass** die Laserstrahlen (2) fokussierende Einrichtungen (16) in mindestens einer Reihe angeordnet sind, dass wenigstens eine Strahlfalle (17) und im Strahlengang vor der fokussierenden Einrichtung (16) jeweils entweder ein Klappspiegel oder ein verfahrbarer Spiegel (15) angeordnet sind, so dass Laserstrahlen (2) entweder bei Vorhandensein eines Eies zum Schneiden auf dessen Schale oder bei Nichtvorhandensein eines Eies auf die Strahlfalle (17) treffen, und dass die Antriebe für die Klappspiegel oder verfahrbaren Spiegel (15) mit der Steuereinrichtung verbunden sind.

5. Einrichtung nach Patentanspruch 1 und 4, **dadurch gekennzeichnet, dass** im Strahlengang nach einer die Laserstrahlen (2) auskoppelnden Einrichtung wenigstens ein erster Strahlteiler (11) angeordnet ist, dass sich im Strahlengang nach dem ersten Strahlteiler (11) für den ersten und den zweiten Teilstrahl jeweils ein zweiter Strahlteiler (13) und ein Ablenkspiegel (14) befinden und dass nach den zweiten Strahlteilern (13) und den Ablenkspiegeln (14) jeweils entweder der Klappspiegel oder der verfahrbare Spiegel (15) sowie die fokussierende Einrichtung (16) angeordnet sind.

6. Einrichtung nach Patentanspruch 5, **dadurch gekennzeichnet, dass** wenigstens eine Einrichtung bestehend aus einem zweiten Strahlteiler (13), entweder einem Klappsiegel oder einem verfahrbaren Spiegel (15) sowie einer fokussierenden Einrichtung (16) verfahrbar am Mechanismus (6) angeordnet ist, so dass der Abstand zu mindestens einer benachbarten Einrichtung einstellbar ist.

7. Einrichtung nach Patentanspruch 5, **dadurch gekennzeichnet, dass** wenigstens eine Einrichtung bestehend aus einem Ablenkspiegel (14), entweder einem Klappsiegel oder einem verfahrbaren Spiegel (15) sowie einer fokussierenden Einrichtung (16) verfahrbar am Mechanismus (6) angeordnet ist, so dass der Abstand zu mindestens einer benachbarten Einrichtung einstellbar ist.

8. Einrichtung nach Patentanspruch 1, **dadurch gekennzeichnet, dass** der Träger (5) eine Palette mit in mehreren Reihen angeordneten Öffnungen oder Vertiefungen zur teilweisen Aufnahme jeweils eines Eies ist, wobei jeweils eine Reihe quer zur Transportvorrichtung (4) der Palette angeordnet ist, und dass der Laser (1), die Transportvorrichtung (4) und die Bestandteile des Mechanismus (6) mit der Steuereinrichtung so zusammengeschaltet sind, dass die Schalen jeweils mindestens einer Reihe von Eiern geschnitten werden.

9. Einrichtung nach Patentanspruch 1, **dadurch gekennzeichnet, dass** das Antriebssystem (8) und die Steuereinrichtung so zusammengeschaltet sind, dass die Schale des Eies über dessen Umfang bis auf wenigstens einen Steg geschnitten wird.
